# EUROPÄISCHE PATENTANMELDUNG

(11) **EP 3 872 107 A1**
(43) Veröffentlichungstag der Anmeldung: **01.09.2021**
(21) Anmeldenummer: 20160008.7
(22) Anmeldetag: 28.02.2020
(51) Int. Cl.: C08G 18/09, C08G 18/16, C08G 18/18, C08G 18/22, C08G 18/40, C08G 18/42, C08G 18/48, C08G 18/50, C08G 18/76, C08G 18/32, C08G 18/54, C08G 18/67

(54) **NEUARTIGE POLYOLVERBINDUNGEN UND EIN VERFAHREN ZUR HERSTELLUNG VON PUR-/PIR-SCHAUMSTOFFEN AUF IHRER BASIS**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Polyolverbindungen, welche durch die Umsetzung von Ethylenoxid mit einer Ethylenoxid-reaktiven Verbindung, die über n Ethylenoxid - reaktive Gruppen verfügt und mindestens drei Furaneinheiten enthält, erhalten werden können, wobei das molare Verhältnis von Ethylenoxid zu den Ethylenoxid-reaktiven Gruppen r in der Umsetzung mindestens 2r+1 beträgt, lassen sich in vorteilhafter Weise für die Herstellung von Polyurethan-Schaumstoffen bzw. Polyurethan-/Polyisocyanurat-Schaumstoffen einsetzen.

## Beschreibung

Die vorliegende Erfindung betrifft Polyolverbindungen, welche durch die Umsetzung von Ethylenoxid mit einer Ethylenoxid-reaktiven Verbindung, die über n Ethylenoxid - reaktive Gruppen verfügt und mindestens drei Furaneinheiten enthält, erhalten werden können, wobei das molare Verhältnis von Ethylenoxid zu den Ethylenoxid-reaktiven Gruppen r in der Umsetzung mindestens 2r+1 beträgt. Die vorliegende Erfindung betrifft ebenfalls das Verfahren zur Herstellung dieser Polyolverbindungen und ihren Einsatz bei der Herstellung von PolyurethanSchaumstoffen bzw. Polyurethan-/Polyisocyanurat-Schaumstoffen (im Folgenden einzeln oder gemeinsam auch als "PUR-/PIR-Schaumstoffe" bezeichnet).

Neben dem Isocyanat bestimmt die Auswahl des Polyols bzw. der Polyolformulierung die Eigenschaften von Polyurethanen und Polyisocyanuraten. In PUR-/PIR-Hartschaumstoffen werden zumeist Polyole auf petrochemischer Basis eingesetzt. Aufgrund von Nachhaltigkeitsaspekten werden Polyole auf Basis nachwachsender Rohstoffe als Einsatzstoffe immer interessanter. So werden z.B. der anteilige Einsatz von biobasierten Ausgangsstoff wie Fettsäuren und -alkoholen (Ölsäure, Sojaöl etc.) in der Polyol - Synthese beschrieben.

So wie alle organischen Polymere sind auch PUR-/PIR-Schaumstoffe brennbar, wobei die große Oberfläche pro Masseneinheit in Schaumstoffen dieses Verhalten noch verstärkt. werden häufig als Isolationsmaterialien eingesetzt, beispielsweise als Dämmstoff in der Bauindustrie. Die Entflammbarkeit kann durch den Einsatz von aromatischen Ausgangsstoffen günstig beeinflusst werden. Auf der Polyolseite gehören dabei z.B. auf Phthalsäuren basierende Polyester zu häufig eingesetzten Verbindungen. Ein Beispiel für ein Polyol auf Basis aromatischer nachwachsender Rohstoffe sind solche, welche auf Cardanol basieren, welches sich aus Cashewkernschalen gewinnen lässt. Auch Verbindungen auf Basis von Furfurylalkohol gehören dazu, diese haben jedoch noch keinen kommerziellen Eingang in die Polyurethanchemie gefunden.

DE 3244077 A1 beschreibt den Einsatz von propoxylierten Furanderivaten als einbaubare Komponente in Urethanschaumstoffen mit herabgesetztem Entflammbarkeitspotential. Die Propoxylierung wird als entscheidendes Kriterium dafür genannt, dass die Viskosität des Furanderivats und seine Verträglichkeit mit Fluorkohlenstoffen niedrig genug ist, um als Komponente verwendet zu werden. Allerdings werden mit diesen Polyolen die flammhemmenden Eigenschaften von Phthalsäure-basierten Polyesterpolyolen nicht erreicht.

Die Aufgabe der vorliegenden Erfindung ist es, isocyanat-reaktive aromatische Polyole auf Basis nachwachsender Rohstoffe für die Herstellung von PUR-/PIR-Schaumstoffen zur Verfügung zu stellen, wobei die PUR-/PIR-Schaumstoffe enthaltend diese aromatischen Polyole einen guten Flammschutz und im Vergleich zu Schaumstoffen enthaltend äquivalente Anteile eines aromatischen Polyol auf petrochemischer Basis mindestens so gute mechanische Eigenschaften aufweisen, insbesondere in Bezug auf Oberflächensprödigkeit und Dimensionsstabilität.

Diese Aufgabe konnte überraschenderweise gelöst werden durch die Bereitstellung von Polyolverbindungen **PF,** welche durch die Umsetzung von Ethylenoxid mit mindestens einer Ethylenoxid-reaktiven Verbindung **ER,** die über r Ethylenoxid - reaktive Gruppen verfügt und mindestens zwei Furaneinheiten enthält, erhalten werden können, wobei das molare Verhältnis von Ethylenoxid zu den Ethylenoxid-reaktiven Gruppen r in der Umsetzung mindestens 2r+1 beträgt.

Die Polyolverbindungen **PF** stellen eine nachhaltige Alternative zur Verwendung der zumeist auf petrochemischen aromatischen Bausteinen basierenden Polyesterverbindungen in Polyurethan - bzw. Polyisocyanuratverbindungen dar. Insbesondere ist hiermit der Ersatz von Phthalsäure-basierten Polyestern möglich, ohne dass auf deren günstiges Eigenschaftsprofil verzichtet werden muss.

Die Polyolverbindungen **PF** werden hergestellt durch die Ethoxylierung der Ethylenoxid - reaktiven Verbindungen **ER.** Bei den Verbindungen **ER** handelt es sich um aminische Verbindungen, welche in mindestens zwei aminischen Substituenten mindestens eine Furaneinheit aufweisen.

Die Ethylenoxid - reaktiven Verbindungen **ER** sind ausgewählt aus der Gruppe der Verbindungen mit der allgemeinen Formel I:

(H-Y-CHR)ₙ₋NHₘ₋(-CHR'-Y-CHR"-OH)₃₍ₙ₊ₘ₎

mit
n = 0, 1
m=0, 1
n + m = 0, 1 oder 2
Y = -C₂H₂OC₂H₂- (Furanring)
R = H, Alkyl, Aryl
R', R" = H, Alkyl, Aryl
und Mischungen daraus.

In einer bevorzugten Mischung beträgt n im zahlenmittleren Durchschnitt 0 bis <1, insbesondere ist n ≤ 0,5.

Weiterhin bevorzugt sind solche Verbindungen, bei denen R = H, CH₃, C₂H₆, C₃H₇ oder Phenyl ist.

Weiterhin bevorzugt sind solche Verbindungen, bei denen R' = R" = H ist.

Bevorzugt beträgt die mittlere Funktionalität r, bezogen auf die Anzahl an Ethylenoxid-reaktiven Funktionen der Verbindungen **ER,** 1,5 - 3,0. Bei den Ethylenoxid - reaktiven Funktionalitäten handelt es sich bevorzugt um Zerewitinoff -aktive Wasserstoffe, insbesondere aus einer Hydroxyl- oder Amingruppe.

Besonders bevorzugt ist die Verbindung 5,5',5"-Nitrilotris(methylene)tris-2-furanmethanol, das beispielsweise nach dem in der US 4219487 A beschriebenen Prozess hergestellt werden kann. Es enthält als Nebenprodukte nicht umgesetzte Ausgangsprodukte sowie Wasser und gegebenenfalls oliogomere Furfurylalkohole, die für die weitere Umsetzung nicht abgetrennt werden müssen.

Die Ethoxylierung der Verbindung **ER** bzw. der Mischungen aus Verbindungen **ER** kann nach dem Fachmann bekannten Methoden erfolgen. Die nach der Ethoxylierung erhaltenen Produkte, die Polyolverbindungen **PF,** enthalten je nach Herstellungsverfahren unterschiedliche Mengen an Polyethylenglykolen und ethoxyliertem Furfurylmethanol als Nebenprodukte und weisen bevorzugt eine Hydroxylzahl im Bereich von 170 - 450 mg KOH/g auf und eine mittlere OH-Funktionalität von 1,5 - 3,0 auf.

Gegenstand der Erfindung ist auch ein Verfahren zur Herstellung von PUR-/PIR-Schaumstoffen durch die Umsetzung eines Reaktionsgemisches enthaltend

| | |
|---|---|
| **A** | eine Isocyanat-reaktive Komponente enthaltend die Polyolkomponente A1 umfassend die erfindungsgemäße Polyolverbindung **PF,** |
| mit | |
| **B** | einer Isocyanatkomponente, |
| in Gegenwart von | |
| **C** | einem Treibmittel. |

Die Isocyanat-reaktive Komponente **A** kann weiterhin optional
- **A2**: niedermolekulare isocyanat-reaktive Verbindungen,
- **A3**: Katalysatoren,
- **A4**: Hilfs- und Zusatzstoffe und/oder
- **A5**: chemische Treibmittel
enthalten.

Überraschenderweise wurde gefunden, dass die erfindungsgemäßen PUR-/PIR-Schaumstoffe enthaltend die Polyolverbindung **PF** einen guten Flammschutz trotz niedrigem Gehalt an aromatischen Polyester-Verbindungen aufweisen. Gleichzeitig weisen die PUR-/PIR-Schaumstoffe gute mechanische Eigenschaften, wie Zugfestigkeit, Bruchdehnung, Zähigkeit und Offenzelligkeit der PUR-/PIR-Schaumstoffe auf.

Die Isocyanat-reaktive Komponente **A** enthält bevorzugt 4 - 80 Gew.-% des Polyols **PF,** bezogen auf das Gesamtgewicht der Komponente A.

Neben der Polyolverbindung **PF** kann die Polyolkomponente **A1** weitere Polyolverbindungen ausgewählt aus der Gruppe bestehend aus Polyetherpolyolen, Polyesterpolyolen, Polyetheresterpolyolen, Polycarbonatpolyolen und Polyether-Polycarbonatpolyolen. Bevorzugt sind Polyesterpolyole und/oder Polyetherpolyole. Die isocyanatreaktive Komponente A1 weist bevorzugt eine Hydroxylzahl zwischen 150 bis 450 mg KOH/g, insbesondere 170 - 270 mg KOH/g für PIR - Schäume (Index > 160, insbesondere > 240) und 350 - 450 mg KOH/g für PUR - Schäume (Index 80 - 160, insbesondere 100 - 160). Vorzugsweise weisen die einzelnen Polyolkomponenten ein zahlenmittleres Molekulargewicht von 120 g/mol bis 6000 g/mol, insbesondere 400 g/mol bis 2000 g/mol und besonders bevorzugt 400 g/mol bis 700 g/mol auf.

Die zahlenmittlere Molmasse Mₙ (auch: Molekulargewicht) wird im Rahmen dieser Erfindung durch Gelpermeationschromatographie nach DIN 55672-1 (August 2007) bestimmt.

Die OH-Zahl (auch: Hydroxylzahl) gibt im Falle eines einzelnen zugesetzten Polyols dessen OH-Zahl an. Angaben der OH-Zahl für Mischungen beziehen sich auf die zahlenmittlere OH-Zahl der Mischung, berechnet aus den OH-Zahlen der einzelnen Komponenten in ihren jeweiligen molaren Anteilen. Die OH-Zahl gibt die Menge an Kaliumhydroxid in Milligramm an, welche der bei einer Acetylierung von einem Gramm Substanz gebundenen Menge Essigsäure gleichwertig ist. Die OH-Zahl wird im Rahmen der vorliegenden Erfindung nach der Norm DIN 53240-1 (Juni 2013) bestimmt.

"Funktionalität" bezeichnet im Rahmen der vorliegenden Erfindung die theoretische, aus den bekannten Einsatzstoffen und deren Mengenverhältnissen berechnete mittlere Funktionalität (Anzahl der Gruppen im Molekül mit gleicher Reaktivität aufweisen).

Das Äquivalentgewicht gibt das Verhältnis der zahlenmittleren Molekularmasse und der Funktionalität der Isocyanat-reaktiven Komponente an. Die Angaben des Äquivalentgewichts für Mischungen berechnen sich aus Äquivalentgewichten der einzelnen Komponenten in ihren jeweiligen molaren Anteilen und beziehen sich auf das zahlenmittlere Äquivalentgewicht der Mischung.

Die Polyesterpolyole der Komponente **A1** können beispielsweise Polykondensate aus mehrwertigen Alkoholen, vorzugsweise Diolen, mit 2 bis 12 Kohlenstoffatomen, vorzugsweise mit 2 bis 6 Kohlenstoffatomen, und Polycarbonsäuren, wie z.B. Di-, Tri- oder sogar Tetracarbonsäuren, oder Hydroxycarbonsäuren oder Lactonen sein, bevorzugt werden aromatische Dicarbonsäuren oder Gemische aus aromatischen und aliphatischen Dicarbonsäuren verwendet. Anstelle der freien Polycarbonsäuren können auch die entsprechenden Polycarbonsäureanhydride oder entsprechende Polycarbonsäureester von niederen Alkoholen zur Herstellung der Polyester verwendet werden. Bevorzugt verwendet werden Phthalsäureanhydrid, Terephthalsäure und/oder Isophthalsäure. Als Carbonsäuren kommen insbesondere in Betracht: Bernsteinsäure, Glutarsäure, Adipinsäure, Korksäure, Azelainsäure, Sebazinsäure, Decandicarbonsäure, Tetrahydrophthalsäure, Hexahydrophthalsäure, Cyclohexandicarbonsäure, Tetrachlorphthalsäure, Itaconsäure, Malonsäure, Furandicarbonsäuren, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, Trimellithsäure, Benzoesäure, Trimellitsäure, Maleinsäure, Fumarsäure, Phthalsäure, Isophthalsäure und Terephthalsäure. Verwendet werden können ebenso Derivate dieser Carbonsäuren, wie beispielsweise Dimethylterephthalat. Die Carbonsäuren können dabei sowohl einzeln als auch im Gemisch verwendet werden. Als Carbonsäuren werden bevorzugt Adipinsäure, Sebacinsäure und/oder Bernsteinsäure, besonders bevorzugt Adipinsäure und/oder Bernsteinsäure, verwendet. Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Propiolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Cyclohexandimethanol, 1,3-Butandiol, 1,4-Butandiol, 1,6-Hexandiol und Isomere, Neopentylglykol oder Hydroxypivalinsäureneopentylglykolester. Vorzugsweise verwendet werden Ethylenglykol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Daneben können auch Polyole wie Trimethylolpropan, Glycerin, Erythrit, Pentaerythrit, Trimethylolbenzol oder Trishydroxyethylisocyanurat eingesetzt werden, wobei Glycerin und Trimethylolpropan bevorzugt sind. Es können zusätzlich auch einwertige Alkanole mit verwendet werden.

Erfindungsgemäß eingesetzte Polyetherpolyole werden nach dem Fachmann bekannten Herstellungsmethoden erhalten, wie beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält. Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Ethylenoxid. Die Alkylenoxide können in Kombination mit CO₂ umgesetzt werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 2,2'-, 2,4'- und 4,4'-Diaminodiphenylmethan. Vorzugsweise verwendet werden zwei oder mehrwertige Alkohole, wie Ethandiol, 1,2- und 1,3-Propandiol, Diethylenglykol, Dipropylenglykol, 1,4-Butandiol, 1,6-Hexandiol, Triethanolamin, Bisphenole, Glycerin, Trimethylolpropan, Pentaerythrit, Sorbit und Saccharose.

Bevorzugt enthält die Komponente A1 5-60 Gew.-% an Polyethylenglykolen mit Molekulargewichten zwischen 40-300 g/mol.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen. Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenole und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit CO₂ erhältlich sind.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit 4 bis 6 Kohlenstoffatomen oder aromatische Dicarbonsäuren, die einzeln oder im Gemisch verwendet werden. Beispielhaft seien Korksäure, Azelainsäure, Decandicarbonsäure, Furandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit 1 bis 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume. Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten. Startermoleküle sind zum Beispiel Diole wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden. Neben den Diolen können als Startermoleküle für die Herstellung der Polyether auch Verbindungen mit mehr als 2 Zerewitinoff-aktiven Wasserstoffen, besonders mit zahlenmittleren Funktionalitäten von 3 bis 8, insbesondere von 3 bis 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole. Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Herstellungsverfahren der Polyole sind dem Fachmann bekannt und in der einschlägigen Fachliteratur beschrieben.

Neben den oben beschriebenen Polyolen können auch andere isocyanat-reaktive Verbindungen enthalten sein, beispielsweise Graft-Polyole, Polyamine, Polyaminoalkohole und Polythiole, insbesondere umfassen die beschriebenen Isocyanat-reaktiven Komponenten auch solche Verbindungen mit gemischten Funktionalitäten.

Weiterhin können in der Isocyanat-reaktiven Komponente **A** niedermolekulare Isocyanat-reaktive Verbindungen **A2** enthalten sein, vorzugsweise di- oder trifunktionelle Amine und Alkohole, bevorzugt Diole und/oder Triole mit Molmassen Mₙ kleiner als 400 g/mol, insbesondere von 60 bis 300 g/mol, zum Einsatz kommen, z.B. Triethanolamin, Diethylenglykol, Ethylenglykol und Glycerin. Sofern zur Herstellung der Polyurethan-Hartschaumstoffe solche niedermolekularen Isocyanat-reaktiven Verbindungen Anwendung finden, z.B. in der Funktion als Kettenverlängerungsmittel und/oder Vernetzungsmittel kommen diese zweckmäßigerweise in einer Menge von bis zu 5 Gew.-%, bezogen auf das Gesamtgewicht der Komponente **A**, zum Einsatz.

Als Katalysator **A3** zur Herstellung der PUR-/PIR-Schaumstoffe werden Verbindungen verwendet, welche die Reaktion der reaktiven Wasserstoffatome, insbesondere Hydroxylgruppen enthaltenden Verbindungen mit der Isocyanatkomponente **B** beschleunigen, wie z. B. tertiäre Amine oder Metallsalze. Die Katalysatorkomponenten können dem Reaktionsgemisch zudosiert oder auch ganz oder teilweise in der Isocyanat-reaktiven Komponente **A** vorgelegt werden.
Verwendet werden beispielsweise tertiäre Amine, wie Triethylamin, Tributylamin, Dimethylbenzylamin, Dicyclohexylmethylamin, Dimethylcyclohexylamin, N, N ,N', N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N, N, N, N-Tetramethylhexandiamin-1,6, Pentamethyldiethylentriamin, Bis[2-(dimethylamino)ethyl]ether, Dimethylpiperazin, N-Dimethylaminoethylpiperidin, 1,2-Dimethyl-imidazol, 1-Azabicyclo-(3,3,0)-octan, 1,4-Diaza-bi-cyclo-(2,2,2)-octan (Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazin, z.B. N,N',N"-Tris-(dimethylaminopropyl)-hexahydrotriazin und Triethylendiamin.

Es können auch Metallsalze wie z. B. Alkali- oder Übergangsmetallsalze eingesetzt werden. Als Übergangsmetallsalze werden beispielsweise Zink-, Wismut-, Eisen-, Blei- oder bevorzugt Zinnsalze eingesetzt. Beispiele für eingesetzte Übergangsmetallsalze sind Eisen(II)-chlorid, Zinkchlorid, Bleioctoat, Zinndioctoat, Zinndiethylhexoat und Dibutylzinndilaurat. Besonders bevorzugt ist das Übergangsmetallsalz ausgewählt aus mindestens einer Verbindung aus der Gruppe bestehend aus Zinndioctoat, Zinndiethylhexoat und Dibutylzinndilaurat. Beispiele für Alkalimetallsalze sind Alkalialkoholate, wie z. B. Natriummethylat und Kaliumisopropylat, Alkalicarboxylate, wie z. B. Kaliumacetat, sowie Alkalimetallsalze von langkettigen Fettsäuren mit 10 bis 20 C-Atomen und gegebenenfalls seitenständigen OH-Gruppen. Bevorzugt als Alkalimetallsalz werden ein oder mehrere Alkalicarboxylate eingesetzt.

Als Katalysator **A3** kommen ferner in Betracht: Amidine, wie z. B. 2,3-Dimethyl-3,4,5,6-tetrahydropyrimidin, Tetraalkylammoniumhydroxide, wie z. B. Tetramethylammonium-hydroxid, Alkalihydroxide, wie z. B. Natriumhydroxid, und Tetraalkylammonium- oder Phosphoniumcarboxylate. Darüber hinaus sind Mannichbasen und Salze von Phenolen geeignete Katalysatoren. Es besteht auch die Möglichkeit, die Reaktionen ohne Katalyse ablaufen zu lassen. In diesem Fall wird die katalytische Aktivität von mit Aminen gestarteten Polyolen ausgenutzt. Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu besonders flammwidrigen PIR-Schaumstoffen.

Die oben genannten Katalysatoren können alleine oder in Kombination miteinander eingesetzt werden.

Gegebenenfalls können ein oder mehrere Hilfs- und Zusatzstoffe (Additive) als Komponente **A4** eingesetzt werden. Beispiele für die Komponente **A4** sind oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Rizinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen.
Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu nennen. Im Einzelnen seien beispielhaft genannt: anorganische Füllstoffe wie silikatische Mineralien, beispielsweise Schichtsilikate wie z. B. Antigorit, Serpentin, Sepiolit, Hornblenden, Amphibole, Chrisotil, Montmorillonit und Talkum, Metalloxide, wie Kaolin, Aluminiumoxide, Titanoxide und Eisenoxide, Metallsalze, wie Kreide, Huntit, Schwerspat und anorganische Pigmente, wie Magnetit, Goethit, Cadmiumsulfid und Zinksulfid, sowie Glas u.a. sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kolophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und Kohlenstofffasern.

Die Hilfs- und Zusatzstoffe umfassen bevorzugt auch Flammschutzmittel wie Phosphate, z. B. Triethylphosphat (TEP), Triphenylphosphat (TPP), Trikresylphosphat, Diphenylkresyl-phosphat (DPK), tert-Butylphenyldiphenylphosphat, Resorcinyldiphenylphosphat (auch als Oligomer) und Bisphenol-A-bis(diphenylphosphat) (auch als Oligomer), Ammoniumpolyphosphate (APP) und Phosphonate, z.B. Diethylethylphosphonat (DEEP), Dimethylpropylphosphonat (DMPP), Diethanolaminomethylphosphonsäurediethylester, Veriquel® R100 bzw. "E06-16" von der Fa. ICL, und auch gemischte Phosphonate wie Ethylbutylhydroxymethylphosphonat sowie Phosphinate wie 9,10-Dihydro-9-oxa-10-phosphorylphenanthrene-10-oxid (DOPO), Salze der Diphenylphosphinigen Säure und Salze der Diethylphosphinigen Säure Et₂PO₂H (Exolit® OP 1235, Exolit® OP 935, Exolit® OP 935, Exolit® OP L 1030) eingesetzt werden. Weitere geeignete Flammschutzmittel sind beispielsweise bromierte Ester, bromierte Ether (Ixol) oder bromierte Alkohole wie Dibromneopentylakohol, Tribromneopentylalkohol, Tetrabromphthalat Diol, sowie chlorierte Phosphate wie Tris(2-chlorethyl)phosphat, Tris-(2-chlorpropyl)phosphat (TCPP), Tris(1,3-dichlorpropyl)phosphat, Tris-(2,3-dibrompropyl)phosphat, Tetrakis-(2-chlorethyl)-ethylen-diphosphat, sowie handelsübliche halogenhaltige Flammschutzpolyole. Bevorzugt sind Diphenylkresylphosphat, Triethylphosphat und Bisphenol-A-bis(Diphenylphosphat). Es ist besonders bevorzugt, dass kein halogenhaltiges Flammschutzmittel eingesetzt wird. Phosphorhaltige Flammschutzmittel werden bevorzugt in einer solchen Menge eingesetzt, dass der Phosphorgehalt, bezogen auf das Gesamtgewicht aller Komponenten **A** und B, 0,2 - 1,6 Gew.% beträgt.

Als geeignete Isocyanatkomponente **B** kommen z. B. Polyisocyanate, d. h. Isocyanate mit einer NCO-Funktionalität von mindestens 2, in Frage. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'- isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'- und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1- bis C6-Alkylgruppen. Bevorzugt wird die Isocyanatkomponente **B** ausgewählt aus mindestens einer Verbindung aus der Gruppe bestehend aus MDI, polymeres MDI und TDI.
Neben den vorstehend genannten Polyisocyanaten können anteilig auch modifizierte Diisocyanate mit Uretdion-, Isocyanurat-, Urethan-, Carbodiimid-, Uretonimin-, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat, mit eingesetzt werden.
Statt oder zusätzlich zu den oben genannten Polyisocyanaten können auch geeignete NCO-Präpolymere als Isocyanatkomponente **B** eingesetzt werden. Die Präpolymere sind herstellbar durch Umsetzung eines oder mehrerer Polyisocyanate mit einem oder mehreren Polyolen, entsprechend den unter den Isocyanat-reaktiven Komponenten **A1** beschriebenen Polyolen.

Die Herstellung der erfindungsgemäßen PUR-/PIR-Schaumstoffe erfolgt nach dem Fachmann bekannten Einstufenverfahren, bei dem die Reaktionskomponenten kontinuierlich oder diskontinuierlich miteinander zur Reaktion gebracht werden und dann anschließend entweder manuell oder durch Zuhilfenahme maschineller Einrichtungen im Hochdruck- oder Niederdruckverfahren nach Austrag auf ein Transportband oder in geeignete Formen zur Aushärtung gebracht werden.

Das physikalische Treibmittel **C** kann einer der Komponenten **A** oder **B,** insbesondere A, zudosiert werden oder bei der Vermischung zugegeben werden. Als Treibmittel wird mindestens eine Verbindung, ausgewählt aus der Gruppe bestehend aus physikalischen und chemischen Treibmittel, eingesetzt. In einer bevorzugten Ausführungsform wird nur physikalisches Treibmittel eingesetzt. Physikalische Treibmittel sind beispielsweise niedrig siedende organische Verbindungen, wie z.B. Kohlenwasserstoffe, halogenierte Kohlenwasserstoffe, Ether, Ketone, Carbonsäureester oder Kohlensäureester. Geeignet sind insbesondere organische Verbindungen, welche gegenüber der Isocyanatkomponente **B** inert sind und Siedepunkte unter 100 °C, vorzugsweise unter 50 °C bei Atmosphärendruck aufweisen. Diese Siedepunkte haben den Vorteil, dass die organischen Verbindungen unter dem Einfluss der exothermen Polyadditionsreaktion verdampfen. Beispiele solcher, vorzugsweise verwendeten organischen Verbindungen sind Alkane, wie Heptan, Hexan, n- und iso-Pentan, vorzugsweise technische Gemische aus n- und iso-Pentanen, n- und iso-Butan und Propan, Cycloalkane, wie z. B. Cyclopentan und/oder Cyclohexan, Ether, wie z. B. Furan, Dimethylether und Diethylether, Ketone, wie z. B. Aceton und Methylethylketon, Carbonsäurealkylester, wie z. B. Methylformiat, Dimethyloxalat und Ethylacetat und halogenierte Kohlenwasserstoffe, wie z. B. Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch bevorzugt ist der Einsatz von (hydro)fluorierten Olefinen, wie z. B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en). Auch Gemische zweier oder mehrerer der genannten organischen Verbindungen können verwendet werden. Die organischen Verbindungen können dabei auch in Form einer Emulsion aus kleinen Tröpfchen eingesetzt werden.

Die Komponente **A** kann auch bis zu 1 mol/kg isocyanat-reaktives chemisches Treibmittel **A5,** wie beispielsweise Wasser, Carbonsäure und deren Gemische, enthalten. Diese reagieren mit Isocyanatgruppen unter Bildung des Treibgases, beispielsweise entsteht dabei im Falle von Wasser Kohlendioxid und im Falle von z.B. Ameisensäure entsteht Kohlendioxid und Kohlenstoffmonoxid. Als Carbonsäure wird bevorzugt mindestens eine Verbindung, ausgewählt aus der Gruppe bestehend aus Ameisensäure, Essigsäure, Oxalsäure und Ricinolsäure, eingesetzt. Als chemisches Treibmittel wird besonders bevorzugt Wasser eingesetzt, welches beispielsweise als nicht abgetrenntes Nebenprodukt in der Polyolverbindung **PF** enthalten ist oder auch extra zugesetzt wird.

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden: Kennzahl = (Mole Isocyanat-Gruppen / Mole Isocyanat-reaktive Gruppen) ^{∗} 100

Erfindungsgemäß beträgt die Kennzahl (Index) im Reaktionsgemisch 80 - 600.

Für einen PUR/PIR-Schaum mit einem hohen Anteil an Polyisocyanuraten (PIR) wird bevorzugt eine Kennzahl in einem Bereich von ≥ 240 eingesetzt. Die PIR-Strukturen führen zu einer höheren Flammwidrigkeit des Schaums selbst.

In einer bevorzugten Ausführungsform liegt die Kennzahl des Reaktionsgemischs bei 240-440, und der Anteil der Polyolverbindung **PF** an der isocyanat-reaktiven Komponente A1 bei 30-80 Gew.%. Die mittlere Funktionalität der Komponente **A1** beträgt in dieser Ausführungsform insbesondere 1,5 - 2,5, besonders bevorzugt 1,7-2,2.

In einer anderen bevorzugten Ausführungsform beträgt die Kennzahl des Reaktionsgemischs >240 und der Anteil der Polyolverbindung **PF** an der isocyanat-reaktiven Komponente A1 beträgt 10-20 Gew.-%. Die mittlere Funktionalität der Komponente **A1** beträgt in dieser Ausführungsform insbesondere 2,5 - 3,0.

Bei niedrigen Kennzahlen, z.B. in einem Kennzahlbereich von 100 - 160 beträgt die Funktionalität der Komponente A1 bevorzugt 2,5 - 3,0. Der Schaum wird hier als Polyurethanschaum (PUR-Schaum) bezeichnet, und neigt zum Beispiel zu geringerer Sprödigkeit als ein entsprechender Schaum mit höherer Kennzahl.

Die Erfindung betrifft ebenfalls einen PUR-/PIR-Schaumstoff, der mit den erfindungsgemäßen Polyolverbindungen **PF** und durch das erfindungsgemäße Verfahren hergestellt ist.

Die erfindungsgemäßen PUR-/PIR-Schaumstoffe finden bevorzugt zur Herstellung von Verbundelementen Verwendung. Üblicherweise findet hier die Verschäumung in kontinuierlicher oder diskontinuierlicher Weise gegen mindestens eine Deckschicht statt.
Ein weiterer Gegenstand der Erfindung ist demzufolge die Verwendung eines erfindungsgemäßen PUR-/PIR-Schaumstoffes als Isolationsschaumstoff und/oder als Haftvermittler in Verbundelementen, wobei die Verbundelemente eine einen erfindungsgemäßen PUR-/PIR-Schaumstoff umfassende Schicht und mindestens eine Deckschicht umfassen. Die Deckschicht wird hierbei zumindest teilweise von einer den erfindungsgemäßen PUR-/PIR-Schaumstoff umfassenden Schicht kontaktiert. Verbundelemente der hier interessierenden Art werden auch als Sandwich-Elemente oder Dämmplatten bezeichnet und dienen in der Regel als Bauelemente für den Schallschutz, die Dämmung, zum Hallenbau oder für den Fassadenbau. Die Deckschichten können dabei z.B. Metallbahnen, Kunststoffbahnen oder bis zu 7 mm starke Spanplatten bilden, abhängig vom Einsatzzweck der Verbundelemente. Bei den einen oder zwei Deckschichten kann es sich jeweils um eine flexible Deckschicht, z.B. um eine Aluminium-Folie, Papier, Multischicht-Deckschichten aus Papier und Aluminium oder aus Mineralvließ, und/oder um eine starre Deckschicht, z.B. aus Stahlblech oder Spanplatten, handeln.

In einer besonders bevorzugten Ausführungsform betrifft die Erfindung ein Verfahren, bei dem ein Reaktionsgemisch enthaltend

| | |
|---|---|
| **A** | eine isocyanatreaktive Komponente enthaltend |
| | 10 - 90 Gew. - % einer oder mehrerer der Verbindungen **A1**, umfassend |
| | 10 - 80 Gew.-%, bezogen auf das Gesamtgewicht der Komponente **A1**, einer oder mehrerer Verbindungen der **PF,** |
| | 0-10 Gew. - % einer oder mehrerer der Verbindungen **A2** |
| | gegebenenfalls Katalysator **A3,** |
| | gegebenenfalls Hilfs-und Zusatzstoffe **A4,** |
| | gegebenenfalls chemisches Treibmittel **A5,** |
| | |
| mit | |
| **B** | monomerem und/oder polymerem MDI |
| in Gegenwart von | |
| **C** | physikalischen Treibmittel, enthaltend eine oder mehrere Verbindungen ausgewählt aus der Gruppe bestehend aus halogenfreien chemischen Treibmitteln, halogenfreien physikalischen Treibmitteln und (hydro)fluorierten Olefinen, |
| **D** | optional Füllstoffe |

umgesetzt wird.

Insbesondere sollte der Gehalt an Furangruppen (C₄H₂O) in der isocyanatreaktiven Komponente bezogen auf das Gesamtgewicht der Komponenten **A+ B** bei 2 - 250 g/kg (A+B), d.h. bei 0,2 - 25 Gew.% und besonders bevorzugt bei 0,25 - 12,5 Gew.-% liegen.

In einer bevorzugten Ausführungsform umfasst **A3** tertiäre Amine in einer Menge von 0,2-1,2 Gew.-% bezogen auf das Gesamtgewicht der Komponenten A+B sowie Alkalicarboxylate in einer Menge von 5-50 mmol /kg(A+B), bevorzugt von 20-40 mmol / kg(A+B).

In einer bevorzugten Ausführungsform umfasst **A4** einen Schaumstabilisator in einer Menge von 0,2 - 1,6 Gew.-% bezogen auf das Gesamtgewicht der Komponenten A+B.

In einer bevorzugten Ausführungsform enthält **A5** weiterhin bis zu 1 mol/kg **A** eines Treibmittels, das bei Reaktion mit Isocyanat CO₂ freisetzt.

In einer weiterhin bevorzugten Ausführungsform umfasst **A4** Flammschutzmittel.

Die Erfindung betrifft ebenfalls einen PUR-/PIR-Schaumstoff, erhältlich nach dem erfindungsgemäßen Verfahren, und die Verwendung der erfindungsgemäßen PUR-/PIR-Schaumstoffe, insbesondere zur Herstellung von Isolationsmaterialien.

### Beispiele

Die OH-Zahl (Hydroxylzahl) wurde gemäß DIN 53240-1 (Juni 2013) bestimmt. Die Bestimmung der Säurezahl wurde gemäß DIN EN ISO 2114 (November 2006) durchgeführt. Die Bestimmung der Viskosität erfolgte auf einem Physica MCR 501 Rheometer der Fa. Anton Paar. Es wurde eine Kegel-Platte-Konfiguration mit einem Abstand von 1 mm gewählt (Messsystem DCP25). Das Polyol (0,1 g) wurde auf der Rheometerplatte aufgebracht und bei 25 °C einer Scherung von 0,01 bis 1000 1/s unterworfen und für 10 min alle 10 s die Viskosität gemessen. Angegeben ist die über alle Messpunkte gemittelte Viskosität.
Die Flammenausbreitung der PUR-/PIR-Schaumstoffe wurde durch Kantenbeflammung mit dem Kleinbrennertest gemäß DIN 4102-1 (Mai 1998) an einer 18 cm x 9 cm x 2 cm großen Probe gemessen.
Die Messung der Wärmefreisetzung erfolgte gemäß ISO 5660-1 (März 2015) mit dem "Cone Calorimeter".
Die Messung der Rohdichte wurde nach der DIN EN ISO 845 (Oktober 2009) durchgeführt.
Die Offenzelligkeit der PUR-/PIR-Schaumstoffe wurde mit einem Accupyk-1330-Gerät an Probenkörpern mit den Maßen 5 cm x 3 cm x 3 cm nach DIN EN ISO 4590 (August 2003) gemessen.
Die angegebenen Zeiten beziehen sich auf den Zeitpunkt, wenn mit dem Vermischen von Polyolformulierung und Isocyanat begonnen wird. Als Startzeit wird der Zeitpunkt angegeben, bei dem mit geschultem Auge ein Beginn des Schäumvorgangs beobachtet wird. Als Abbindezeit wird der Zeitpunkt angegeben, bei dem ein in das aufschäumende Reaktionsgemisch eingetauchter Holzstab beim Herausziehen Fäden aus Polymer mitzieht.

Der NCO-Wert (auch: NCO-Gehalt, Isocyanatgehalt) wird bestimmt mittels EN ISO 11909 (Mai 2007). Falls nicht anders angegeben, handelt es sich um die Werte bei 25°C.

### 1. Einsatzstoffe

| | | |
|---|---|---|
| A-1 | Mannichbase | 5,5',5"-Nitrilotris(methylene)tris-2-furanmethanol: Umsetzungsprodukt aus Ammoniumchlorid, Formaldehyd und Furfurylalkohol, N(-CH₂-(C₄H₂O)CH₂OH)₃ (347 g/mol). Der Gehalt an Furan-Radikal C₄H₂O im Molekül beträgt 57 Gew.-%. |
| A-2 | Furanpolyol | Umsetzungsprodukt aus A-1 mit **Propylenoxid** mit einer OH-Zahl von 288 mg KOH/g. Das Produkt enthält 10% Polyethylenoxid und 4 Gew.-% Ethoxylat von Furfurylmethanol. Die mittlere Funktionalität beträgt also 2,78. Der Furangehalt C₄H₂O berechnet sich zu 23 Gew.-%. |
| A-3 | Furanpolyol | Umsetzungsprodukt aus A-1 mit **Ethylenoxid** mit einer OH-Zahl von 426 mg KOH/g, aufgrund der Gehalte an nicht umgesetztem Furfurylmethanol und Wasser im Edukt beträgt der Gehalt an Polyethylenglycol 75% und die mittlere Funktionalität 2,2. Der Furangehalt C₄H₂O berechnet sich zu 7 Gew.-%. |
| A-4 | Furanpolyol | Umsetzungsprodukt aus A-1 mit Ethylenoxid (1:8,6 mol/mol) mit einer OH-Zahl von 304 mg KOH/g; Das Produkt enthält 8,3% Polyethylenoxid und 3,3 Gew.-% Ethoxylat von Furfurylmethanol. Die mittlere Funktionalität beträgt also 2,82. Der Furangehalt C₄H₂O berechnet sich zu 24 Gew.-%. |
| A-5 | Furanpolyol-Abmischung | Abmischung aus 497 g Furanpolyol A-3 und 503 g Desmophen® 2003E, einem linearen Polyesterpolyol aus Adipinsäure, Diethylenglycol und Ethylenglycol mit einer OH-Zahl von 56 mg KOH/g. Die berechnete OH-Zahl der Mischung beträgt 240 mg KOH/g. Der Furangehalt C₄H₂O berechnet sich zu 3,5 Gew.-%. |
| A-6 | Furanpolyol-Abmischung | Abmischung aus 533 Gramm Furanpolyol A-3 und 467 Gramm Desmophen®L2830, einem Polyetherpolyol aus Propylenglycol, Propylenoxid und Ethylenoxid mit einer OH-Zahl von 28 mg KOH/g. Die berechnete OH-Zahl der Mischung beträgt 240 mg KOH/g. Der Furangehalt C₄H₂O berechnet sich zu 3,7 Gew.-%. |
| A-7 | Polyesterpolyol | Als Vergleich dient Stepanpol® PS2352 (Fa. Stepan), ein Diol auf Basis von Phthalsäureanhydrid und Diethylenglycol mit einer OH-Zahl von 240 mg KOH/g. |
| A-8 | Katalysator | Dimethylcyclohexylamin |
| A-9 | Katalysator | Kaliumacetat 25 Gew.-% in Diethylenglycol |
| A-10 | Schaumstabilisator | Polyalkylenoxid-modifiziertes Polysiloxan, Tegostab® B8421 (Evonik) |
| A-11 | Flammschutzmittel | Tris(chlorpropyl)phosphat, Levagard® PP (Lanxess) |
| A-12 | Flammschutzmittel | Ammoniumpolyphosphat Exolit® AP422 (Clariant) |
| A-14 | Polyetherpolyol | Umsetzungprodukt aus Glyzerin und Propylenoxid mit einer OH-Zahl von 400 mg KOH/g |
| A-15 | Polyetherpolyol | Umsetzungprodukt aus ortho-TDA (Isomerengemisch), Ethylenoxid und Propylenoxid mit einer OH-Zahl von 460 mg KOH/g |
| A-16 | Polyesterpolyol | Umsetzungsprodukt aus TMP, Adipinsäure, Phthalsäureanhydrid und Ölsäure mit einer OH-Zahl von 370 mg KOH/g. |
| A-17 | Schaumstabilisator | Polyalkylenoxid-modifiziertes Polysiloxan mit einer OH-Zahl von 12 mg KOH/g |
| A-18 | Polyetherpolyol | Umsetzungprodukt aus Sucrose, Ethylenglycol und Propylenoxid mit einer OH-Zahl von 440 mg KOH/g und einer nominellen Funktionalität von 2,9 |
| A-19 | Polyesterpolyol | Umsetzungsprodukt aus Sorbitol, Phthalsäureanhydrid, Diethylenglycol, Ethylendiamin und Propylenoxid mit einer nominellen Funktonalität von 2,9 und einer OH-Zahl von 435 mg KOH/g. |
| A-20 | Flammschutzmittel | Ixol® B251 (Brom-haltiges Polyethrrpolyol mit <= 6,5 Gew.-% Triethylphosphat von Fa. Solvay mit einer OH-Zahl von 330 mg KOH/g. Der Bromgehalt liegt bei 31,5 Gew.-%, der Chlorgehalt bei 6,9 Gew.-%. |
| A-21 | Polyesterpolyol | 2-funktionelles Umsetzungsprodukt aus Phthalsäureanhydrid, Adipinsäure, Ethylenglycol und Diethylenglycol mit einer OH-Zahl von 240 mg KOH/g |
| A-22 | Polyesterpolyol | Difunktionelles Umsetzungsprodukt aus Phthalsäureanhydrid, Diethylenglycol und Ethylenoxid mit einer OH-Zahl von 310 mg KOH/g |
| A-23 | Polyesterpolyol-Abmischung | Abmischung aus A-21 und A-22 im Gewichtsverhältnis 1:1 mit einer berechneten OH-Zahl von 275 mg KOH/g, |
| A-24 | Furanpolyol-Abmischung | Abmischung aus A-21 und A-2 im Gewichtsverhältnis 18:46 mit einer berechneten OH-Zahl von 275 mg KOH/g. Der Furangehalt C₄H₂O berechnet sich zu 16,5 Gew.-%, |
| A-25 | Furanpolyol-Abmischung | Abmischung aus A-21 und A-4 im Gewichtsverhältnis 29:35 mit einer berechneten OH-Zahl von 275 mg KOH/g, Der Furangehalt C₄H₂O berechnet sich zu 10,9 Gew.-%, |
| A-26 | Furanpolyol-Abmischung | Abmischung aus A-21 und A-3 im Gewichtsverhältnis 52:12 mit einer berechneten OH-Zahl von 275 mg KOH/g. Der Furangehalt C₄H₂O berechnet sich zu 1,3 Gew.-%, |
| A-27 | Flammschutz | Triethylphosphat |
| A-28 | Säure | 2-Funktionelles Umsetzungsprodukt aus Phthalsäureanhydrid und Diethylenglycol (1:1 molar) im Überschuss Diethylenglycol mit einer Säurezahl von 96 mg KOH/g. |
| A-29 | Katalysator | Desmorapid 30HB13 A (Covestro Deutschland AG) |
| B-1 | Isocyanat | Desmodur® 44V20L, phosgeniertes Anilin-Formaldehyd-Polymer mit 313 g NCO/kg und einer Viskosität von 0,2 Pa*s bei 25°C. |
| B-2 | Isocyanat | Polymeres Isocyanat mit 31,3 Gew.-% NCO und einer Viskosität von 0,7 Pa*s bei 25°C (Desmodur® 44V70L) |
| C-1 | Physikalisches Treibmittel | Gemisch aus Isopentan und Cyclopentan im Gewichtsverhältnis von 70:30 |
| C-2 | Physikalisches Treibmittel | n-Pentan |

### 2. Herstellung der Furanpolyole

### Beispiel 1: Herstellung der Mannichbase A-1 (Herstellung nach US 4219487)

In einem 4-dm³-Vierhalskolben mit Tropftrichter, Rückflusskühler, Pt-100-Thermofühler und Eiskühlung wurden 972,8 g Formaldehydlösung (37 Gew.-% in Wasser, 12 mol) und 214,4 g Ammoniumchlorid (4 mol) vorgelegt. Dazu wurden 1176,0 g Furfurylalkohol (12 mol) langsam zugetropft, so dass die Temperatur nicht über 293 K stieg. Nach beendigter Zugabe wurde die Reaktionsmischung für vier Stunden bei 29°C gerührt, wobei eine Lösung entstand. Danach wurden 160,0 g NaOH (4 mol, gelöst in 160ml H₂O) zugetropft. Die Temperatur erreichte dabei maximal 305 K. Die Reaktionsmischung wurde in einen Scheidetrichter gegeben und dreimal mit deionisiertem Wasser (0,7 dm³, 0,4 dm³ und 0,3 dm³) bis zum Erreichen von pH 7-8 gewaschen. Anschließend wurden am Rotationsverdampfer Restwasser und überschüssiger Alkohol abgezogen (287,2 g).

Man erhielt 1197 g Produkt A-1 mit einer OH-Zahl von 429 mg KOH/g und einer Säurezahl von 1,9 mg KOH/g.

### Beispiel 2: Herstellung von Furanpolyol A-2 (Vergleich)

In einen 2-1- Laborautoklaven wurden unter Stickstoffatmosphäre 324,1 g Mannichbase A-1 gegeben. Nach Zugabe von 2,200 g einer Lösung (44,89 Gew.-%) von KOH in Wasser wurde der Autoklav verschlossen. Sauerstoff wurde bei Raumtemperatur durch 3-maliges Beaufschlagen des Autoklaven mit Stickstoff bis zu einem Absolutdruck von 4 bar und anschließendes Evakuieren entfernt. Der Inhalt des Autoklaven wurde unter Rühren (Kreuzbalkenrührer, 100 min⁻¹) auf 110 °C erwärmt. Wasser wurde bei dieser Temperatur über einen Zeitraum von 3 Stunden bei angelegtem Vakuum unter Rühren mit 100 min⁻¹. entfernt. Hierbei stellte sich ein Druck von etwa 25 mbar ein. Die Rührerdrehzahl wurde auf dann auf 800 U/min erhöht. Bei 110 °C wurden insgesamt 308,5 g Propylenoxid mit konstanter Dosierrate in den Kopfraum des Reaktors über einen Zeitraum von 5 h dosiert. Nach einer Nachreaktionsphase von 18 h Dauer wurde der Inhalt des Autoklaven bei 110 °C über einen Zeitraum von 1,25 h im Vakuum (80 mbar) ausgeheizt. Nach Abkühlen auf 80 °C wurden 1,047 g einer 85 Gew.-%igen Lösung von Milchsäure in Wasser zugegeben. Nach Zugabe von 0,752 g Irganox® 1076 wurde 30 min. bei 80 °C nachgerührt. Der Reaktorinhalt wurde sodann in einen Mehrhalsglaskolben überführt und dort nach dreimaligem Evakuieren und Wiederbeaufschlagen mit Stickstoff im Ölpumpenvakuum (5 mbar) über einen Zeitraum von 3 h bei 110 °C ausgeheizt.

Man erhielt ein dunkel gefärbtes Endprodukt mit einer OHZ von 288,2 mg KOH / g.

### Beispiel 3: Herstellung von Furanpolyol A-3

In einen 201 Reaktor wurden unter Stickstoffatmosphäre 2453 g Mannichbase A1 gegeben. Nach Zugabe von 6,5 g n-Methylimidazol wurde der Reaktor verschlossen. Sauerstoff wurde bei Raumtemperatur durch 3-maliges Beaufschlagen des Reaktors mit Stickstoff bis zu einem Absolutdruck von 4 bar und anschließendes Ablassen des Überdrucks auf Normaldruck entfernt. Der Inhalt des Reaktors wurde unter Rühren (Gitterrührer, 250 min-1) auf 110 °C erwärmt. Bei 110 °C wurden insgesamt 2453 g Ethylenoxid in den Kopfraum des Reaktors über einen Zeitraum von 2 h 15 min dosiert. Nach einer Nachreaktionsphase von 35 min Dauer wurde eine Probe von 386 g aus dem Reaktor entnommen. Diese Probe war dunkel gefärbt und hat eine OHZ von 386 mg KOH/g und eine Viskosität von 3115 mPa.s. Danach wurde eine weitere Menge von 4037 g Ethylenoxid in den Kopfraum des Reaktors über einen Zeitraum von 3 h dosiert. Nach einer Nachreaktionsphase von 38 min Dauer wurde 4,5 g IRGANOX® 1076 zugegeben. Man erhielt ein dunkel gefärbtes Endprodukt mit einer OHZ von 426 mg KOH / g und einer Viskosität (25 °C) von 0,35 Pa*s.

### Beispiel 4: Herstellung von Furanpolyol A-4

In einen 2 dm³ Laborautoklaven wurden unter Stickstoffatmosphäre 500 g Mannichbase A1 gegeben. Nach Zugabe von 6,539 g einer Lösung (44,89 Gew.-%) von KOH in Wasser wurde der Autoklav verschlossen. Sauerstoff wurde bei Raumtemperatur durch 3-maliges Beaufschlagen des Autoklaven mit Stickstoff bis zu einem Absolutdruck von 3 bar und anschließendes Ablassen des Überdrucks auf Normaldruck entfernt. Der Inhalt des Autoklaven wurde unter Rühren (Kreuzbalkenrührer, 100 min-1) auf 110 °C erwärmt. Wasser wurde bei dieser Temperatur über einen Zeitraum von 3 Stunden bei angelegtem Vakuum und gleichzeitiger Einleitung von Stickstoff (ca. 50 ml / min.) unter die Flüssigkeitsoberfläche unter Rühren mit 100 min-1. entfernt. Hierbei stellte sich ein Druck von etwa 185 mbar ein. Die Rührerdrehzahl wurde auf dann auf 800 U/min erhöht. Bei 110 °C wurden insgesamt 475,7 g Ethylenoxid mit konstanter Dosierrate in den Kopfraum des Reaktors über einen Zeitraum von 5 h dosiert. Nach einer Nachreaktionsphase von 1,0 h Dauer wurde der Inhalt des Autoklaven bei 110 °C über einen Zeitraum von 0,75 h im Vakuum (80 mbar) ausgeheizt. Nach Abkühlen auf 80 °C wurden 97,5 g destilliertes Wasser und dann 20,934 g einer 12,25 gew.-%igen Lösung von Schwefelsäure in Wasser zugegeben. Nach Zugabe von 0,494 g IRGANOX® 1076 wurde 30 min. bei 80 °C nachgerührt. Der Reaktorinhalt wurde sodann in einen Mehrhalsglaskolben überführt und dort nach dreimaligem Evakuieren und Wiederbeaufschlagen mit Stickstoff bei 80 °C im Wasserstrahlvakuum entwässert. Danach wurde das Produkt im Ölpumpenvakuum (5 mbar) über einen Zeitraum von 3 h bei 110 °C ausgeheizt. Schließlich wurde das Produkt bei 80 °C über ein Tiefenfilter (T 750, Fa. Seitz) in einer Drucknutsche filtriert. Man erhielt ein dunkel gefärbtes Endprodukt mit einer OH-Zahl von 304 mg KOH / g und einer Viskosität (25 °C) von 25,8 Pas.

### Beispiele 5 - 9: Herstellung von Polyurethan-modifizierten Polyisocyanuratschaumstoffen

Die Furanpolyol -Mischungen A-24, A-25 und A-26 wurden auf eine gemeinsame Misch-OH-Zahl von 275 mg KOH/g eingestellt, so dass die Schaumstoffe mit Ausnahme von Beispiel 5* alle mit sowohl gleicher Kennzahl als auch gleichem Mischungsverhältnis hergestellt werden konnten.

Es wurde ein Basispolyol aus 5 ppw A-15 (Polyetherpolyol auf Basis oTDA), 2,2 ppw A-28 (Säure), 20 ppw A-11 (Flammschutzmittel), 5 ppw A-27 (Flammschutz), 6 ppw A-17 (Schaumstabilisator), 3,4 ppw A-29 hergestellt und damit die in Tabelle 2 angegebenen Reaktionsmischungen formuliert. Die Bestandteile der Isocyanat-reaktiven Komponente **A** wurden inklusive des Treibmittels C-2 bei geringer Drehzahl vorgemischt. Dann wurde die Komponente **B** zugegeben und die Mischung wird für 10 Sekunden mit einem Pendraulikmischer bei 4200 min-1 gerührt. Die Reaktionsmischung wurde dann in eine mit Papier ausgekleidete Holzkiste von 2^{∗}2 dm² Grundfläche und 1 dm Wandhöhe gegossen und schäumte dort frei auf.

**Tabelle 2.**

| Versuch | Beispiel 5* | Beispiel 6* | Beispiel 7* | Beispiel 8 | Beispiel 9 | |
|---|---|---|---|---|---|---|
| | Nur Ester | Nur Ester | Ester + PO-Furan | Ester + EO-Furan | Ester + EO-Furan | |
| Basispolyol | 41,6 | 41,6 | 41,6 | 41,6 | 41,6 | Gewichtsteile |
| A-21 | 64 | | | | | Gewichtsteile |
| A-23 | | 64 | | | | Gewichtsteile |
| A-24 | | | 64 | | | Gewichtsteile |
| A-25 | | | | 64 | | Gewichtsteile |
| A-26 | | | | | 64 | Gewichtsteile |
| C-2 | 13,7 | 13,7 | 13,7 | 13,7 | 13,7 | Gewichtsteile |
| B-2 | 177,18 | 196,73 | 196,73 | 196,73 | 196,73 | Gewichtsteile |
| Kennzahl | 360 | 360 | 360 | 360 | 360 | |

Reaktions- und Schaumeigenschaften sind in den folgenden Tabellen 3 und 4 zusammengestellt.

**Tabelle 3. (Reaktions-)Eigenschaften der PUR/PIR - Schäume**

| Versuch | | Beispiel 5* | Beispiel 6* | Beispiel 7* | Beispiel 8 | Beispiel 9 |
|---|---|---|---|---|---|---|
| Startzeit | s | 23 | 24 | 23 | 19 | 19 |
| Abbindezeit (Fadenziehzeit) | s | 45 | 50 | 47 | 42 | 38 |
| Steigzeit | s | 100 | 110 | 75 | 95 | 75 |
| Klebfreizeit | s | 190 | 170 | 110 | 140 | 95 |
| Kern - Rohdichte | kg/m³ | 39,6 | 40,1 | 44,0 | 42,9 | 38,4 |
| Offenzelligkeit | % | 9 | 10 | 11 | 13 | 9 |
| Sprödigkeit der Oberfläche | | stark | stark | leicht | leicht | leicht |

Die Sprödigkeit der Oberfläche wird durch einen erfahrenen Laboranten ca. 20 Stunden nach Beenden des Aufschäumvorganges haptisch beurteilt. Die Trifurylaminalkoxylat-basierten Schaumstoffe zeichnen sich durch eine geringere Sprödigkeit gegenüber den Vergleichsbeispielen aus. Das gilt sowohl für die erfindungsgemäßen Ethoxylate als auch für die vorbeschriebenen Propoxylate. Diese beiden unterscheiden sich jedoch in ihrer Flammwidrigkeit.

**Tabelle 4. Flammwidrigkeiten der PUR/PIR- Schäume**

| Versuch | | Beispiel 5* | Beispiel 6* | Beispiel 7* | Beispiel 8 | Beispiel 9 |
|---|---|---|---|---|---|---|
| Beurteilung der Flammwidrigkeit nach DIN 4102 | | | | | | |
| Maximale vertikale Flammhöhe | cm | 12 | 15 | 15 | 14 | 13 |
| Maximale Brenndauer | s | 10 | 10 | 10 | 10 | 10 |
| Zeit bis Erreichen der 15 cm Messmarke | s | | 4 | 4 | | |
| "B2"-Einstufung | | Ja | Nein | Nein | Ja | Ja |

| Messungen mit dem Cone Calorimeter nach ISO 5660-1 | | | | | | |
|---|---|---|---|---|---|---|
| MARHE | kW/m² | 114 | n.d.¹ | n.d. | n.d. | 113 |
| Masseverlust über 600 Sekunden ("TML") | Gew.-% | 71 | n.d. | n.d. | n.d. | 63 |

| Flammtest nach DIN ISO 1182 | | | | | | |
|---|---|---|---|---|---|---|
| Masseverlust | Gew.-% | 98,4 | n.d. | n.d. | n.d. | 98,4 |
| Dauer d. anhaltenden Entflammung | s | 61 | n.d. | n.d. | n.d. | 59 |

| | | | | | | |
|---|---|---|---|---|---|---|
| ¹n.d. = nicht gemessen | | | | | | |

Diese Versuche zeigen, dass man auch mit Polyolen auf Basis nachwachsender Rohstoffe Polyurethan-modifizierte Polyisocyanuratschaumstoffe herstellen kann, die die Anforderungen der Baustoffklasse B2 genauso erfüllen wie Schaumstoffe, die auf Polyolen mit petrochemischer Grundlage beruhen. Die Schaumstoffe zeigen weniger PIR-typische Sprödigkeit als PIR-Schaumstoffe nach dem Stand der Technik auf Basis von Phthalat-basierte Polyesterpolyolen. Die vorbeschriebene Nutzung von Umsetzungsprodukten mit Propylenoxid (US 4426460) ist Umsetzungsprodukten mit Ethylenoxid bezüglich der Flammwidrigkeit sichtbar unterlegen.

### Beispiele 10-12: Herstellung von Polyurethan-modifizierten Polyisocyanuratschaumstoffen

Es wurde ein Basispolyol aus 0,8 ppw A-8, 2,7 ppw A-9, 2 ppw A-10, 15,5 ppw A-11, 5 ppw A-12, 0,8 ppw Wasser hergestellt und damit entsprechend Beispielen 5-9 die in Tabelle 5 angegebenen Reaktionsmischungen formuliert. In Tabellen 6 und 7 sind die Reaktionseigenschaften und die Schaumeigenschaften widergegeben.

**Tabelle 5: Formulierungen**

| Versuch | Beispiel 10 | Beispiel 11 | Beispiel 12* | |
|---|---|---|---|---|
| Basispolyol | 26,8 | 26,8 | 26,8 | Gewichtsteile |
| A-5 | 73,2 | | | Gewichtsteile |
| A-6 | | 73,2 | | Gewichtsteile |
| A-7 | | | 73,2 | Gewichtsteile |
| C-1 | 16,7 | 16,7 | 16,7 | Gewichtsteile |
| B-1 | 190,1 | 190,1 | 190,1 | Gewichtsteile |
| Kennzahl | 320 | 320 | 320 | |

**Tabelle 6: Eigenschaften**

| Versuch | | Beispiel 10 | Beispiel 11 | Beispiel 12* |
|---|---|---|---|---|
| Startzeit | s | 14 | 14 | 15 |
| Abbindezeit (Fadenziehzeit) | s | 55 | 55 | 55 |
| Steigzeit | s | 55 | 55 | 55 |
| Kern - Rohdichte | kg/m³ | 30 | 31 | 30 |
| Maximale Flammhöhe (DIN4102) | cm | 13 | 14 | 14 |
| "B2"-Einstufung | | ja | ja | ja |

**Tabelle 7: Messungen mit dem Cone Calorimeter ISO 5660-1²)**

| Versuch | | Beispiel 10 | Beispiel 12* |
|---|---|---|---|
| Maximum der Wärmefreisetzung (HRRₚₑₐₖ) | kW/m² | 109 | 115 |
| Maximum der gemittelten Wärmefreisetzung (MARHE) | kW/m² | 102 | 117 |

Diese Versuche zeigen, dass man auch mit Polyolen auf Basis nachwachsender Rohstoffe Polyurethan-modifizierte Polyisocyanuratschaumstoffe herstellen kann, die die Anforderungen der Baustoffklasse B2 genauso erfüllen wie Schaumstoffe, die auf state-of-the-art Polyolen mit petrochemischer Grundlage (Beispiel 12*) beruhen.

### Beispiele 13 -15: Herstellung von Polyurethanschaumstoffen (PUR)

Aus folgenden Komponenten wurde ein Basispolyol formuliert: 2,76 g A-14, 1,97 g A-15, 3,94 g A-16, 0,41 g A-17, 12,21 g A-11, 0,98 g Glyzerin, 0,73 g Wasser, 0,75 g A-18, 0,09 g A-8, 0,22 g Katalysator Niax® A1, 0,04 g Pentamethyldiethylentriamin, 1,22 g A-9. Der Chlorgehalt der Mischung liegt bei 15,7 Gew.-%, der Phosphorgehalt bei 4,6 Gew.-%. Entsprechend der Herstellung von Beispielen 5-9 wurden die in Tabelle 8 angegebenen Reaktionsmischungen formuliert. In Tabelle 9 sind die Reaktionseigenschaften und die Schaumeigenschaften widergegeben.

**Tabelle 8:**

| | | Beispiel 13* | Beispiel 14 | Beispiel 15 |
|---|---|---|---|---|
| Basispolyol | g | 25,34 | 25,34 | 25,34 |
| A-19 | g | 12,09 | 12,09 | - |
| A-20 (Br-haltig) | g | 5,71 | | |
| A-4 | g | - | 5,71 | 17,81 |
| C-1 (n-Pentan) | g | 1,76 | 1,76 | 1,76 |
| Isocyanat B-2 | g | 55,1 | 55,1 | 55,1 |
| Kennzahl | | 124 | 124 | 135 |
| Bromgehalt | Gew.-% bezogen auf Schaumstoff | 1,8 | - | - |
| Chlor gehalt | | 4,0 | 4,0 | 4,0 |
| Phosphorgehalt | | 1,2 | 1,2 | 1,2 |

**Tabelle 9: Reaktions- und Schaumeigenschaften**

| Mischzeit | | Beispiel 13* | Beispiel 14 | Beispiel 15 |
|---|---|---|---|---|
| Mischzeit | s | 8 | 8 | 8 |
| Startzeit | s | 14 | 13 | 11 |
| Abbindezeit (Fadenziehzeit) | s | 25 | 23 | 20 |
| Steigzeit | s | 40 | 35 | 28 |
| Kern - Rohdichte | kg/m³ | 40 | 38 | 37 |
| Dimensionsstabilität | % | 1,01 | 1,00 | 0,99 |
| Maximale Flammhöhe (DIN 4102) | cm | 14 | 15 | 15 |
| Zerstörte Probenlänge (DIN 4102) als Maß für die Neigung zur Verkohlung | cm | 13 | 12 | 12 |

Die erfindungsgemäßen Brom-freien Schaumstoffe auf Basis nachwachsender Rohstoffe zeigen ein im Rahmen der statistischen Genauigkeit vergleichbares Verhalten im Test nach DIN 4102 und sind gleichzeitig vorteilhaft aktiver.

### Herstellung von Polyurethanschaumstoffen mit festem Flammschutzmittel (1)

Aus folgenden Komponenten wurde ein Basispolyol formuliert:
6,07 g A-14, 1,97 g A-15, 4,04 g A-16, 0,90 g A-17, 26,86 g A-11, 2,16 g Glyzerin, 1,62 g Wasser, 1,65 g A-18, 0,19 g A-8, 0,48 g Katalysator Niax® A1, 0,10 g Pentamethyldiethylentriamin, 4,49 g Exolit® AP422, 0,63 g (C₂H₅)₂PO₂H, 2,69 g A-9.

Entsprechend der Herstellung von Beispielen 5-9 wurden die in Tabelle 10 angegebenen Reaktionsmischungen formuliert. In Tabelle 11 sind die Reaktionseigenschaften und die Schaumeigenschaften widergegeben.

**Tabelle 10.**

| | | Beispiel 16* | Beispiel 17 |
|---|---|---|---|
| Basispolyol | g | 60,8 | 60,8 |
| A-19 | g | 26,6 | |
| A-20 | g | 12,6 | |
| A-4 | g | | 39,2 |
| C-1 (n-Pentan) | g | 3,86 | 3,86 |
| Isocyanat B-2 | g | 122,6 | 122,1 |
| Kennzahl | | 124 | 135 |
| Bromgehalt | Gew.-% bezogen auf den Schaumstoff | 0,9 | |
| Chlor gehalt | | 4,3 | 3,9 |
| Phosphorgehalt | | 1,9 | 1,8 |

**Tabelle 12. Reaktions- und Schaumeigenschaften**

| Versuch | | Beispiel 16* | Beispiel 17 |
|---|---|---|---|
| Startzeit | s | 25 | 12 |
| Abbindezeit (Fadenziehzeit) | s | 55 | 23 |
| Steigzeit | s | 65 | 40 |
| Maximale Flammhöhe (DIN 4102) | cm | 145 | 130 |
| "B2"-Einstufung (in Anlehnung an DIN4102) | | ja | ja |
| Brenndauer (DIN 4102) | s | 18-19 | 15-16 |
| Rauchgasdichte nach ISO 5660-1 | m²/m² | 11,7-12,6 | 8,5-9,3 |

Die Ermittlung der Baustoffklasse B2 durch Brandprüfung nach DIN 4102-1 sowie die Ermittlung der Rauchgasdichte im Cone-Calorimeter nach ISO 5660-1.

Der erfindungsgemäße Brom-freien Schaumstoff zeigt ein im Rahmen der statistischen Genauigkeit vergleichbares Verhalten im Test nach DIN 4102 und ist aber gleichzeitig vorteilhaft aktiver und günstiger in der Rauchentwicklung.

### Beispiele 18-19. Herstellung von Polyurethanschaumstoffen mit festem Flammschutzmittel (2)

Aus folgenden Komponenten wurde ein Basispolyol formuliert:
2,68 g A14, 1,91 g A15, 3,82 g A16, 0,40 g A17, 11,85 g A11, 0,95 g Glyzerin, 0,71 g Wasser, 0,73 g A18, 0,09 g A8, 0,21 g Katalysator Niax® A1, 0,04 g Pentamethyldiethylentriamin, 1,98 g Exolit® AP422, 0,4 g (C₂H₅)₂PO₂H, 1,19 g A9

Entsprechend der Herstellung von Beispielen 5-9 wurden die in Tabelle 12 angegebenen Reaktionsmischungen formuliert. In Tabelle 13 sind die Reaktionseigenschaften und die Schaumeigenschaften widergegeben.

**Tabelle 12.**

| | | Beispiel 18* | Beispiel 19 |
|---|---|---|---|
| Basispolyol | g | 26,90 | 26,96 |
| A-19 | g | 11,71 | - |
| A-20 | g | 5,53 | - |
| Furanpolyol A-4 | g | - | 17,28 |
| C-1 (n-Pentan) | g | 1,70 | 1,70 |
| Isocyanat B-2 | g | 54,15 | 54,06 |
| Kennzahl | | 124 | 135 |

**Tabelle 13. Reaktions- und Schaumeigenschaften**

| | | Beispiel 18* | Beispiel 19 |
|---|---|---|---|
| Startzeit | s | 25 | 12 |
| Abbindezeit (Fadenziehzeit) | s | 43 | 23 |
| Steigzeit | s | 75 | 35 |
| Maximale Flammhöhe (DIN 4102) | cm | 15 | 14 |
| Brenndauer (DIN 4102) | s | 10 | 10 |
| "B2"-Einstufung (in Anlehnung an DIN4102) | | nein | ja |

Der erfindungsgemäße Brom-freien Schaumstoff erreicht die Einstufung "B2", die der Vergleich hier nicht erreicht und ist gleichzeitig vorteilhaft aktiver.

## Patentansprüche

1. Polyolverbindungen **PF,** hergestellt durch Ethoxylierung von Ethylenoxid - reaktiven Verbindungen **ER,** welche über r Ethylenoxid-reaktive Gruppen verfügen und ausgewählt sind aus einer oder mehreren Verbindungen aus der Gruppe der Verbindungen mit der allgemeinen Formel I:
(**I**) (H-Y-CHR)ₙ-NHₘ-(-CHR'-Y-CHR"-OH)₃₋₍ₙ₊ₘ₎
mit
n = 0, 1
m = 0, 1
n + m = 0, 1 oder 2
Y = -C₂H₂OC₂H₂- (Furanring)
R = H, Alkyl, Aryl
R', R" = H, Alkyl, Aryl
wobei r = 3 - n beträgt und das molare Verhältnis von Ethylenoxid zu den Ethylenoxid-reaktiven Gruppen r in der Umsetzung mindestens 2r+1 beträgt.
In einer bevorzugten Mischung beträgt n im zahlenmittleren Durchschnitt 0 bis <1, insbesondere ist n ≤ 0,5.

2. Polyolverbindungen **PF** gemäß Anspruch 1, bei denen R = H, CH₃, C₂H₆, C₃H₇ oder Phenyl ist und / oder R' = R" = H ist.

3. Mischungen aus einer oder mehreren Polyolverbindungen **PF** gemäß einem der vorangehenden Ansprüche, bei denen die mittlere Funktionalität r, bezogen auf die Anzahl an Ethylenoxid-reaktiven Funktionen der Verbindungen **ER,** 1,5 - 3,0 beträgt.

4. Polyolverbindungen **PF** gemäß einem der vorangehenden Ansprüche, bei denen die Verbindungen **ER** die Verbindung 5,5',5"-Nitrilotris(methylene)tris-2-furanmethanol enthalten.

5. Eine isocyanatreaktive Komponente **A** umfassend
**A1** eine Polyolkomponente enthaltend mindestens eine Polyolverbindung **PF** gemäß einem der Ansprüche 1 - 5 und gegebenenfalls weitere Polyolverbindungen ausgewählt aus der Gruppe bestehend aus Polyetherpolyolen, Polyesterpolyolen, Polyetheresterpolyolen, Polycarbonatpolyolen und Polyether-Polycarbonatpolyolen
**A2** niedermolekulare isocyanat-reaktive Verbindungen mit einem Molekulargewicht <200 g/mol,
**A3** optional Katalysatoren und
**A4** optional Hilfs- und Zusatzstoffe
**A5** optional chemische Treibmittel.

6. Eine isocyanatreaktive Komponente **A** gemäß Anspruch 65, enthaltend
10 - 90 Gew. - % einer oder mehrerer der Polyolkomponenten **A1**, umfassend 4 - 80 Gew.-%, bezogen auf das Gesamtgewicht der Komponente **A1**, einer oder mehrerer Verbindungen der **PF,**
0-10 Gew. - % einer oder mehrerer der Verbindungen **A2.**

7. Eine isocyanatreaktive Komponente **A** gemäß Anspruch 6, enthaltend
10 - 90 Gew. - % einer oder mehrerer der Verbindungen **A1**, umfassend 10 - 80 Gew.-%, bezogen auf das Gesamtgewicht der Komponente **A1**, einer oder mehrerer Verbindungen der **PF,**
0-10 Gew. - % einer oder mehrerer der Verbindungen **A2.**

8. Verfahren, bei dem ein Reaktionsgemisch enthaltend
eine isocyanatreaktive Komponente **A** gemäß einem der Ansprüche 6 oder 7 mit
**B** monomerem und/oder polymerem MDI
in Gegenwart von
**C** physikalischen Treibmittel, enthaltend eine oder mehrere Verbindungen ausgewählt aus der Gruppe bestehend aus halogenfreien chemischen Treibmitteln, halogenfreien physikalischen Treibmitteln und (hydro)fluorierten Olefinen,
umgesetzt wird.

9. Verfahren gemäß einem der Ansprüche 7 oder 8, **dadurch gekennzeichnet, dass** das Reaktionsgemisch 0,25 - 25 Gew.% Furangruppen (-C₄H₂O-), bezogen auf das Gesamtgewicht der Komponenten **A + B** enthält.

10. Verfahren gemäß einem der Ansprüche 7 bis 9, **dadurch gekennzeichnet, dass** das Reaktionsgemisch **dadurch gekennzeichnet, dass A3** tertiäre Amine in einer Menge von 0,2-1,2 Gew.-% bezogen auf das Gesamtgewicht der Komponenten A+B sowie Alkalicarboxylate in einer Menge von 5-50 mmol /kg(**A+B**) enthält.

11. Verfahren gemäß einem der Ansprüche 7 bis 10, **dadurch gekennzeichnet, dass** die Kennzahl des Reaktionsgemischs bei 240-440 liegt und der Anteil der Polyolverbindung PF an der isocyanat-reaktiven Komponente A1 bei 30-80 Gew.% beträgt.

12. Verfahren gemäß einem der Ansprüche 7 bis 10, **dadurch gekennzeichnet, dass** die Kennzahl des Reaktionsgemischs >240 liegt und der Anteil der Polyolverbindung **PF** an der isocyanat-reaktiven Komponente **A1** 10-20 Gew.-% beträgt.

13. Verfahren gemäß einem der Ansprüche 7 bis 10, **dadurch gekennzeichnet, dass** die Kennzahl des Reaktionsgemischs 100 - 160 und die Funktionalität der Komponente **A1** 2,5 - 3,0 beträgt.

14. PUR-/PIR-Schaumstoff, erhältlich nach dem Verfahren gemäß einem der Ansprüche 7 - 13.

15. Verwendung der erfindungsgemäßen PUR-/PIR-Schaumstoffe gemäß Anspruch 14 zur Herstellung von Isolationsmaterialien.
